# EUROPÄISCHE PATENTSCHRIFT

(11) **EP 2 819 876 B1**
(45) Veröffentlichungstag und Bekanntmachung des Hinweises auf die Patenterteilung: **07.06.2023**
(21) Anmeldenummer: 13715146.0
(22) Anmeldetag: 26.02.2013
(51) Int. Cl.: B60L 50/60, B60L 53/16, B60L 53/10, B60L 5/36

(54) **STROMÜBERTRAGUNGSVORRICHTUNG ZUR AUFLADUNG ELEKTRISCHER ENERGIESPEICHER VON FAHRZEUGEN AN ÜBERKOPFLADESTATIONEN**
CURRENT TRANSMISSION DEVICE FOR CHARGING ELECTRICAL ENERGY STORES OF VEHICLES AT OVERHEAD CHARGING STATIONS
DISPOSITIF DE TRANSMISSION DE COURANT ÉLECTRIQUE POUR LA RECHARGE D'UN ACCUMULATEUR D'ÉNERGIE ÉLECTRIQUE DE VÉHICULES DANS DES STATIONS DE RECHARGE DE VÉHICULES PAR LE TOIT

(30) Priorität: 27.02.2012 DE 102012202955
(43) Veröffentlichungstag der Anmeldung: 07.01.2015
(73) Patentinhaber: Schunk Transit Systems GmbH, 5151 Nussdorf am Haunsberg (AT)
(72) Erfinder: SANTNER, Josef, A-5300 Hallwang (AT)
(74) Vertreter: advotec.
(86) Internationale Anmeldenummer: PCT/EP2013/053830
(87) Internationale Veröffentlichungsnummer: WO 2013/127800

(56) Entgegenhaltungen:
- EP-A1- 1 097 835
- EP-A1- 2 380 767
- CN-A- 101 580 028
- DE-A1- 3 101 655
- FR-A1- 2 336 272
- GB-A- 1 480 311
- JP-A- 2008 228 412
- JP-A- 2009 113 691
- US-A- 4 603 237
- EV CHARGING SYSTEMS COMMITEE: "(R) SAE Electric Vehicle Conductive Charge Coupler J1772", 19961001 , Bd. J1772, Nr. REV. NOV2001 1. Oktober 1996 (1996-10-01), Seiten 1-32, XP002666503, Gefunden im Internet: URL:http://bzwxw.com/soft/UploadSoft/new5/ SAE--J1772-2001.pdf [gefunden am 2012-01-02]

## Beschreibung

Die Erfindung betrifft eine fahrzeugseitige Stromübertragungsvorrichtung zur stationären Aufladung elektrischer Energiespeicher von Fahrzeugen an Ladestationen mit über dem Fahrzeug angeordneten stromzuführenden Kontaktflächen, mit einem als Gelenkarmsystem ausgebildeten Ladestromabnehmer, der mehrpolig ausgeführt ist und zur stationären Kontaktierung der stromzuführenden Kontaktflächen mindestens drei voneinander isolierte elektrische Kontaktelemente aufweist, die unterschiedliche elektrische Phasen übertragen.

Aus dem Stand der Technik allgemein bekannt sind Verkehrssysteme, bei denen elektrisch angetriebene Fahrzeuge über Oberleitungen mit elektrischer Energie versorgt werden. Insbesondere im öffentlichen Personennahverkehr werden derartige Verkehrsmittel schienengebunden als Straßenbahnen oder spurgebunden als Oberleitungsbusse eingesetzt. Dabei ist zur Fahrstromversorgung ein Stromabnehmer mit elektrischen Schleifkontakten in dauerhaftem Gleitkontakt mit dem über dem Fahrzeug gespannten stromführenden Fahrdraht. Verkehrssysteme dieser Art erfordern erhebliche Investitionen in die bereitzustellende Verkehrsinfrastruktur, insbesondere hinsichtlich der Kosten für Installation und Wartung des Fahrleitungssystems. Zudem ist ein solches Verkehrssystem im Gegensatz zu dem "freien" Straßenverkehr an eine fest vorgegebene Streckenführung gebunden. Neben dieser Schienen- bzw. Spurgebundenheit wird auch das Erscheinungsbild von Oberleitungen gerade in Innenstadtbereichen oft als unästhetisch empfunden.

Im Zuge der fortschreitenden Elektromobilität könnten diese Nachteile durch den Einsatz von Fahrzeugen mit aufladbaren Energiespeichern überwunden werden. Allerdings bedarf es für diese Verkehrsträger zum einen einer Ladeinfrastruktur mit Ladestationen, an denen die Akkumulatoren der Elektrofahrzeuge in bestimmten räumlichen Abständen stationär aufgeladen werden können. Diese Ladestationen können für Fahrzeuge des Personennahverkehrs in Form von Überkopfladestationen vorzugsweise in Haltestellenbuchten angeordnet sein, so dass während des Aufenthalts des Fahrzeugs an einer Haltestelle ein Ladevorgang durchgeführt werden kann.

Zum anderen müssen die Fahrzeuge neben dem elektrischen Antriebskonzept mit Vorrichtungen zur Stromübertragung, also zur elektrischen Kontaktierung der Überkopfladestationen und zur Ableitung des Ladestroms ausgerüstet sein. Bisher bekannte Stromabnehmersysteme sind nahezu ausschließlich zur Übertragung eines Fahrstroms, d.h. zur Stromversorgung während der Bewegung des Fahrzeugs konzipiert, wobei die zugeführte elektrische Energie ohne Speicherung direkt über eine elektrische Antriebsvorrichtung in Bewegungsenergie umgewandelt wird.

Die Offenlegungsschrift DE 31 01 655 A1 beschreibt eine Stromversorgungseinrichtung für batteriestromgespeiste, nicht schienengebundene Elektrofahrzeuge, die mit einem mehrpoligen Stromabnehmer versehen sind, um bei einem Aufenthalt an einer Haltestelle zur Aufladung der Batterie eine Fahrleitung kontaktieren zu können.

Die Offenlegungsschrift FR 2 336 272 A1 zeigt eine Ladevorrichtung für batteriegetriebene Elektrofahrzeuge, die jeweils mit zwei vorderen und zwei hinteren Stromabnehmern ausgestattet sind, von denen einer den aktiven Stromleiter kontaktiert und der jeweils andere über eine Erdleitung mit Erde verbunden ist.

In der Offenlegungsschrift US 4 603 237 A ist ein Verfahren zum Anschließen und Abnehmen eines Stromabnehmergestells eines Trolley-Fahrzeugs an ein oberhalb des Fahrzeugs befindliches Stromschienensystem, beispielsweise in Grubengängen für die Erzförderung, offenbart.

Die in der europäischen Patentanmeldung EP 2 380 767 A1 offenbarte Erfindung zeigt zwar eine Ladevorrichtung für Fahrzeuge des öffentlichen Verkehrssystems, die mit elektrischen Energiespeichern ausgestattet sind, jedoch ist diese Vorrichtung für einen Ladevorgang konstruiert, der während der Durchfahrt des Fahrzeugs entlang einer Ladestation abläuft. Zu diesem Zweck weisen das Fahrzeug und die Ladestation eine Kontaktierung von Stromschiene und Führungseinrichtung auf, wobei die Länge der Stromschiene so bemessen ist, dass während der Durchfahrt mit einer bestimmten Geschwindigkeit die Kontaktdauer ausreicht, um die notwendige elektrische Energie zu übertragen.

Der vorliegenden Erfindung liegt somit die Aufgabe zu Grunde, für ein Elektrofahrzeug, insbesondere für ein Elektrofahrzeug zur Personenbeförderung im Personennahverkehr, eine möglichst kompakte und leichte Stromübertragungsvorrichtung zur stationären Aufladung der elektrischen Energiespeicher des Elektrofahrzeugs zu entwickeln, die in Verbindung mit einer einfachen Positionierung des Elektrofahrzeugs eine schnelle und sichere elektrische Kontaktierung der stromführenden Kontaktfläche einer Überkopfladestation ermöglicht. Zudem soll die Vorrichtung hohen mechanischen Dauerbelastungen gewachsen sein.

Diese Aufgabe wird in Verbindung mit dem Oberbegriff des Anspruchs 1 dadurch gelöst, dass die Kontaktelemente auf einem gemeinsamen Ladestromabnehmer nebeneinanderliegend auf einer quer zur Fahrtrichtung verlaufenden Achse und voneinander isoliert angeordnet sind und der Ladestromabnehmer mindestens ein elektrisches Kontaktelement aufweist, das als Erdungskontakt ausgebildet ist, und dass das Gelenkarmsystem als Einarmsystem oder als mehrteiliges Scherensystem ausgebildet ist und einen einzigen Basisrahmen aufweist, der mit dem Fahrzeug fest verbunden ist und an dem ein Gelenk-Unterarm des Gelenkarmsystems schwenkbar befestigt ist, wobei Bauelemente des Gelenkarmsystems und des Basisrahmens als stromführende Leiter zum Anschluss eines Kontaktelementes ausgeführt sind und eine Anschlussleitung/ Anschlussleitungen des weiteren elektrischen Kontaktelementes/der weiteren elektrischen Kontaktelemente elektrisch isoliert entlang der Gelenkarme verlaufen.

Da auf dem Dach eines Elektrofahrzeugs, insbesondere wenn es für den Einsatz zur Personenbeförderung mit weiteren Aggregaten wie beispielsweise einer Klimaanlage ausgestattet ist, nur begrenzter Bauraum für die Montage einer Vorrichtung zur Stromabnahme zur Verfügung steht, ermöglicht ein Ladestromabnehmer, der als Gelenkarmsystem ausgebildet ist, bei geringem Platzbedarf ein zuverlässiges An- und Ablegen der Kontaktelemente an/von über dem Fahrzeug installierte(n) Kontaktflächen einer Ladestation. Durch die Konstruktion als Gelenkarmsystem bildet der Stromabnehmer während der Fahrt in eingefahrenem Zustand eine kompakte bauliche Einheit, kann aber bei einem Halt des Fahrzeugs an einer Haltestelle, die mit einer Ladestation ausgerüstet ist, schnell auf eine gewünschte Höhe ausgefahren werden.

Zur stationären Kontaktierung der über dem Fahrzeug verlaufenden stromzuführenden Kontaktfläche einer Ladestation sind an dem als Gelenkarmsystem ausgebildeten Ladestromabnehmer mindestens drei elektrische Kontaktelemente angeordnet, so dass über einen einzigen Stromabnehmer die jeweils zur Aufladung der elektrischen Energiespeicher erforderlichen Phasenkontakte (Spannungspotentiale) mit den jeweiligen Kontaktflächen der Ladestation hergestellt werden können. So ermöglicht die erfindungsgemäße Stromübertragungsvorrichtung beispielsweise bei der Gleichstrom-Aufladung, die zur Aufladung des elektrischen Energiespeichers notwendigen Phasen Plus und Minus über einen einzigen Stromabnehmer zu kontaktieren und abzuleiten.

Die Kontaktelemente sind auf einem gemeinsamen Ladestromabnehmer nebeneinanderliegend quer zur Fahrtrichtung und voneinander isoliert angeordnet. In dieser Ausführung sind alle verschiedenen Kontaktelemente, also sowohl die Phasenkontaktelemente als auch ein Erdungskontakt, nebeneinanderliegend auf einem einzigen, gemeinsamen Ladestromabnehmer angeordnet. Die Kontaktelemente sind daher mit einer Isolierung und hinreichend großen Isolierabständen versehen, wobei der relative seitliche Abstand der Kontaktelemente zueinander dabei durch die Anordnung der stromzuführenden Kontaktfläche der Ladestation vorgegeben und so bemessen ist, dass eine fehlerfreie Kontaktierung möglich ist, insbesondere die Gefahr von Kurzschlüssen ausgeschlossen werden kann.

Der Ladestromabnehmer weist mindestens ein elektrisches Kontaktelement auf, das als Erdungskontakt ausgebildet ist. Da im Gegensatz zu schienengebundenen Fahrzeugen ein Oberleitungsbus durch die Gummibereifung weitgehend von dem Erdpotential isoliert ist, kann eine Erdverbindung über einen Erdungskontakt an dem Ladestromabnehmer und eine entsprechende Erdungs-Kontaktfläche der Ladestation erfolgen. Auf diese Weise können über einen einzigen Ladestromabnehmer sowohl die Phasenkontakte als auch die Erdung hergestellt werden.

Das Gelenkarmsystem ist als Einarmsystem oder als mehrteiliges Scherensystem ausgebildet und weist einen einzigen Basisrahmen auf, der mit dem Fahrzeug fest verbunden ist und an dem ein Gelenk-Unterarm des Gelenkarmsystems schwenkbar befestigt ist.

Ein derartig ausgebildetes Gelenkarmsystem besitzt ein geringes Gewicht, was im Hinblick auf ein möglichst niedriges Fahrzeuggesamtgewicht bei der Vielzahl der Beschleunigungsvorgänge, wie sie beispielsweise im Linienbetrieb eines Elektrobusses vonnöten sind, von Vorteil ist. Zudem zeichnen sich die Gelenkarm-Konstruktionen durch ihre Einfachheit und den geringen Wartungsaufwand aus. Die notwendige Stabilität wird durch nur einen Basisrahmen erzielt, der starr mit dem Fahrzeug verbunden ist und an dem ein unterer Gelenkarm des Gelenkarmsystems schwenkbar befestigt ist.

Die Bauelemente des Gelenkarmsystems und des Basisrahmens sind als stromführende Leiter zum Anschluss eines Kontaktelementes ausgeführt. In dieser Ausgestaltung bilden elektrisch leitfähige Teile des Ladestromabnehmers selbst die Anschlussleitung für ein Kontaktelement. Die Stromableitung der weiteren Kontaktelemente kann über weitere elektrisch isoliert an den Gelenkarmen verlegte Anschlussleitungen erfolgen.

Von Vorteil ist weiterhin, dass die Ausdehnung der Kontaktelemente quer zur Fahrtrichtung hinreichend groß ist, um das Fahrzeug unter den stromzuführenden Kontaktflächen der Ladestation positionieren zu können. Die Länge der Kontaktelemente quer zur Fahrtrichtung ist unter Berücksichtigung der Anordnung der Ladestrom-Kontaktfläche so ausgelegt, dass der Fahrzeugführer ausreichend Positionierungsspielraum besitzt, um das Fahrzeug auch bei einem leichten Spurversatz, beispielsweise infolge der Umfahrung von Hindernissen, derart unter der Ladeeinrichtung zu positionieren, dass die Kontaktflächen der Ladeeinrichtung zuverlässig kontaktiert werden können.

Eine Anschlussleitung/Anschlussleitungen des elektrischen Kontaktelementes/der elektrischen Kontaktelemente elektrisch isoliert in dem /den Gelenkarm(en) integriert. Der über die Kontaktelemente abgenommene Ladestrom wird über Anschlussleitungen, die elektrisch isoliert entlang der Gelenkarme verlaufen, an die Bordnetzelektronik des Fahrzeugs weitergeleitet.

Zur Herstellung einer sicheren Kontaktierung können die einzelnen Kontaktelemente beweglich an dem Stromabnehmer angeordnet sein. Damit ist die notwendige Anpresskraft der einzelnen Kontaktelemente an die stromzuführenden Kontaktflächen auch dann gewährleistet, wenn Fertigungs- oder Montagetoleranzen auszugleichen sind oder wenn das Fahrzeug eine vertikale Schrägstellung aufweist.

Weitere vorteilhafte Ausgestaltungsmerkmale ergeben sich aus der nachfolgenden Beschreibung und den Zeichnungen, die eine bevorzugte Ausführungsform der Erfindung an Hand von Beispielen erläutern. Es zeigen:
- **Fig. 1:**: eine schematische Darstellung eines erfindungsgemäßen Ladestromabnehmers in Seitenansicht entlang der Fahrzeuglängsachse und
- **Fig. 2:**: eine schematische Darstellung des erfindungsgemäßen Ladestromabnehmers in Seitenansicht senkrecht zur Fahrzeuglängsachse.

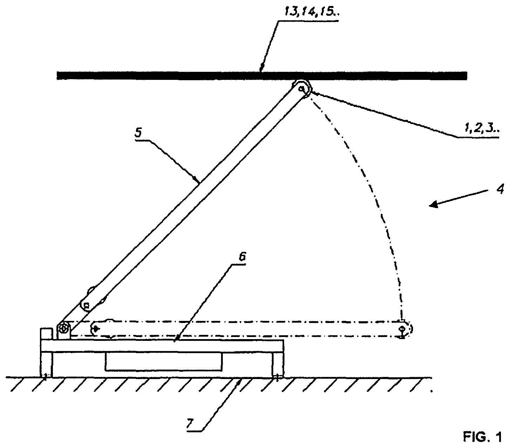

**Fig. 1** zeigt in schematischer Darstellung den Aufbau des erfindungsgemäßen Ladestromabnehmers 4. In der dargestellten Ausführungsform ist der Ladestromabnehmer als einarmiges Gelenkarmsystem mit einem Gelenkarm 5 ausgeführt. Der Gelenkarm 5 ist schwenkbar an einem Basisrahmen 6 befestigt, der wiederum fest auf der Dachfläche eines Elektrofahrzeuges 7 montiert ist. In eingefahrenem Zustand liegt der Gelenkarm 5 parallel zur Dachoberfläche auf dem Basisrahmen 6 auf. An seinem dem Drehlager abgewandten Ende sind an dem Gelenkarm 5 drei Kontaktelemente 1, 2, 3 nebeneinanderliegend auf einer quer zur Fahrtrichtung verlaufenden Achse angeordnet. Durch Aufschwenken des Gelenkarms 5 können die Kontaktelemente 1, 2, 3 mit oberhalb des Fahrzeugs 7 angebrachten stromzuführenden Kontaktflächen 13, 14, 15 einer Ladestation in Berührung gebracht werden. Unter stromzuführenden Kontaktflächen 13, 14, 15 seien hier auch Erdungs-Kontaktflächen zur Verbindung mit dem Erdpotential verstanden.

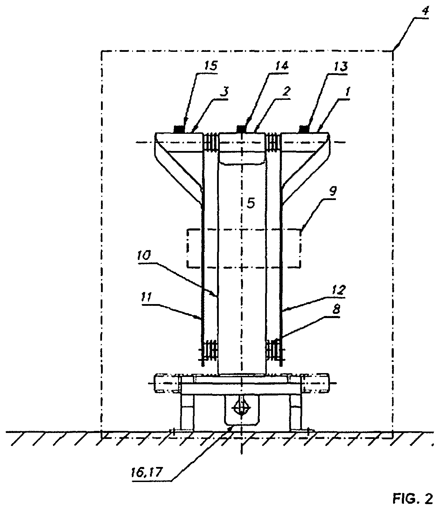

In **Fig. 2** ist der erfindungsgemäße Ladestromabnehmer 4 in einer schematischen Darstellung senkrecht zur Fahrzeuglängsachse gezeigt. Der Gelenkarm 5 befindet sich ausgefahrener Stellung, so dass die Kontaktelemente 1, 2, 3 des Ladestromabnehmers 4 die korrespondierenden Kontaktflächen 13, 14, 15 der Ladestation berühren. Dabei wird der über die äußeren Kontaktelemente 13, 15 fließende Ladestrom durch isoliert 8 an dem Gelenkarm 5 angebrachte Anschlussleitungen 11, 12 abgeleitet. Ein über das mittlere Kontaktelement 14 fließender Strom kann über den elektrisch leitfähigen Gelenkarm 5 selbst abgeleitet werden.

Zum Ausfahren der Kontaktelemente 1, 2, 3 weist der Ladestromabnehmer 4 einen Hubantrieb 16 auf, der pneumatisch, elektrisch, hydraulisch oder mechanisch mit einem Federsystem ausgeführt ist, sowie zum Absenken der Kontaktelemente 1, 2, 3 einen Senkantrieb 17, der ebenfalls pneumatisch, elektrisch, hydraulisch oder mechanisch mit einem Federspeicher ausgeführt ist. Die Absenkung der Kontaktelemente 1, 2, 3 kann auch unter Ausnutzung der Schwerkraft erfolgen.

Durch die vorliegende Erfindung ist mit dem Ladestromabnehmer eine Stromübertragungsvorrichtung geschaffen worden, die ermöglicht, dass über einen einzigen Stromabnehmer mindestens drei oder mehrere elektrische Kontakte hergestellt werden können, die unterschiedliche elektrische Phasen übertragen und gleichzeitig eine Erdung des Fahrzeugs bewirken können. Durch die Ausbildung als Gelenkarmsystem lässt sich die erfindungsgemäße Stromübertragungsvorrichtung bei geringem Gewicht in besonders kompakter Bauform realisieren. Eine derart konstruierte fahrzeugseitige Ladevorrichtung ermöglicht dem Fahrzeugführer eine einfache Positionierung des Fahrzeugs unter der Überkopfladestation verbunden mit einer zuverlässigen Kontaktierung der Kontaktflächen. Die einfache und robuste Konstruktion in Verbindung mit ausgereiften Hub- und Senkantrieben zeichnet sich weiterhin durch Wartungsarmut aus und ist den großen mechanischen Dauerbelastungen gewachsen, die insbesondere im Personennahverkehrsbetrieb mit einer Vielzahl von Hebe- und Senkvorgängen an den Haltestellen auftreten.

## Patentansprüche

1. Fahrzeugseitige Stromübertragungsvorrichtung (4) zur stationären Aufladung elektrischer Energiespeicher von Fahrzeugen (7) an Ladestationen mit über dem Fahrzeug angeordneten stromzuführenden Kontaktflächen (13, 14, 15), mit einem als Gelenkarmsystem (4) ausgebildeten Ladestromabnehmer (4), der mehrpolig ausgeführt ist und zur stationären Kontaktierung der stromzuführenden Kontaktflächen (13, 14, 15) mindestens drei voneinander isolierte elektrische Kontaktelemente (1, 2, 3) aufweist, die unterschiedliche elektrische Phasen übertragen,
**dadurch gekennzeichnet,**
**dass** die Kontaktelemente (1, 2, 3) auf einem gemeinsamen Ladestromabnehmer (4) nebeneinanderliegend auf einer quer zur Fahrtrichtung verlaufenden Achse und voneinander isoliert angeordnet sind und der Ladestromabnehmer (4) mindestens ein elektrisches Kontaktelement (1, 2, 3) aufweist, das als Erdungskontakt ausgebildet ist, und dass das Gelenkarmsystem (4) als Einarmsystem oder als mehrteiliges Scherensystem ausgebildet ist und einen einzigen Basisrahmen (6) aufweist, der mit dem Fahrzeug (7) fest verbunden ist und an dem ein Gelenk-Unterarm (5) des Gelenkarmsystems (4) schwenkbar befestigt ist, wobei Bauelemente des Gelenkarmsystems (4) und des Basisrahmens (6) als stromführende Leiter zum Anschluss eines Kontaktelementes (1, 2, 3) ausgeführt sind und Anschlussleitungen (11, 12) der weiteren elektrischen Kontaktelemente (1, 2, 3) elektrisch isoliert entlang der Gelenkarme verlaufen.

2. Stromübertragungsvorrichtung nach Anspruch 1,
**dadurch gekennzeichnet,**
**dass** die Ausdehnung der Kontaktelemente (1, 2, 3) quer zur Fahrtrichtung hinreichend groß ist, um das Fahrzeug (7) unter den stromzuführenden Kontaktflächen (13, 14, 15) der Ladestation positionieren zu können.

3. Stromübertragungsvorrichtung nach einem der Ansprüche 1 bis 2,
**dadurch gekennzeichnet,**
**dass** die einzelnen Kontaktelemente (1, 2, 3) zur Herstellung einer sicheren elektrischen Kontaktierung beweglich an dem Stromabnehmer (4) angeordnet sind.

4. Stromübertragungsvorrichtung nach einem der Ansprüche 1 bis 3,
**dadurch gekennzeichnet,**
**dass** der Ladestromabnehmer (4) zum Ausfahren der Kontaktelemente (1, 2, 3) einen Hubantrieb (16) aufweist, der pneumatisch, elektrisch, hydraulisch oder mechanisch mit einem Federsystem ausgeführt ist.

5. Stromübertragungsvorrichtung nach einem der Ansprüche 1 bis 4,
**dadurch gekennzeichnet,**
**dass** der Ladestromabnehmer zum Absenken der Kontaktelemente (1, 2, 3) einen Senkantrieb (17) aufweist, der pneumatisch, elektrisch, hydraulisch oder mechanisch mit einem Federspeicher ausgeführt ist oder dass eine Absenkung der Kontaktelemente (1, 2, 3) unter Ausnutzung der Schwerkraft erfolgt.

## Claims

1. A vehicle-side current transmission device (4) for the stationary charging of electrical energy stores of vehicles (7) on charging stations by means of power-supplying contact surfaces (13, 14, 15) arranged above the vehicle, the vehicle-side current transmission device having a charge current collector (4) which is formed as an articulated arm system (4) and is designed to be multi-pole and has, for making stationary contact with the power-supplying contact surfaces (13, 14, 15), at least three electrical contact elements (1, 2, 3) which are isolated from one another and transmit different electrical phases
**characterized in that**
the contact elements (1, 2, 3) are arranged lying next to each other vertically to the driving direction and isolated from one another on a shared charge current collector (4) and the charge current collector (4) has at least one electrical contact element (1, 2, 3) which is formed as a grounding contact and **in that** the articulated arm system (4) is formed as a single-arm system or as a multi-part scissor system and has a single base frame (6) which is tightly connected to the vehicle (7) and to which an articulated lower arm (5) of the articulated arm system (4) is pivotably attached and the components of the articulated arm system (4) and of the base frame (6) are designed as current-carrying conductors for connecting a contact element (1, 2, 3) and connection lines (11, 12) of the further electrical contact elements (1, 2, 3) extend in an electrically isolated manner along the articulated arm.

2. The current transmission device according to claim 1,
**characterized in that**
the circumference of the contact elements (1, 2, 3) vertical to the driving direction is sufficiently large to be able to position the vehicle (7) below the current-supplying contact surfaces (13, 14, 15) of the charging station.

3. The current transmission device according to claim 1 to 2,
**characterized in that**
the individual contact elements (1, 2, 3) for producing a secure electrical contacting are movably arranged on the current collector (4).

4. The current transmission device according to any of the claims 1 to 3,
**characterized in that**
the charge current collector (4) has a lift drive (16) for deploying the contact elements (1, 2, 3), which is designed to be pneumatic, electric, hydraulic or mechanical with a spring system.

5. The current transmission device according to any of the claims 1 to 4,
**characterized in that**
the charge current collector has a lowering drive (17) for lowering the contact elements (1, 2, 3), which is designed to be pneumatic, electric, hydraulic or mechanical with a spring store, or that the contact elements (1, 2, 3) are lowered by utilizing gravity.

## Revendications

1. Dispositif (4) de transmission de courant du côté de véhicule pour la recharge stationnaire d'accumulateurs d'énergie électriques de véhicules (7) aux stations de recharge au moyen des surfaces de contact (13, 14, 15) alimentées en énergie et disposées au-dessus du véhicule, le dispositif (4) de transmission de courant du côté de véhicule ayant une prise (4) de courant de charge qui est formée comme système de bras articulés (4) et qui est conçue pour être multipolaire et qui, pour venir en contact stationnaire avec les surfaces de contact (13, 14, 15) alimentées en énergie, a au moins trois éléments de contact (1, 2, 3) électriques qui sont isolés les uns des autres et qui transmettent des phases électriques différentes
**caractérisé en ce que**
les éléments de contact (1, 2, 3) sont disposés sur une prise (4) de courant de charge commune de manière d'être adjacents les uns aux autres verticalement au sens de la marche et d'être isolés les uns des autres et la prise (4) de courant de charge a au moins un élément de contact (1, 2, 3) électrique qui est formé comme connexion de terre et **en ce que** le système de bras articulés (4) est formé comme système de seul bras ou comme un système de ciseaux en plusieurs parties et a un seul cadre de base (6) qui est fixé solidement au véhicule (7) et auquel un bras articulé inférieur (5) du système de bras articulés (4) est fixé d'une manière pivotante, les composants du système de bras articulés (4) et du cadre de base (6) étant conçus comme conducteurs de courant pour relier un élément de contact (1, 2, 3) et des lignes (11, 12) d'autres éléments de contact (1, 2, 3) électriques étendant d'une manière isolée électriquement le long du bras articulé.

2. Dispositif de transmission de courant selon la revendication 1,
**caractérisé en ce que**
le circonférence d'éléments de contact (1, 2, 3) verticaux au sens de la marche est assez grand afin de pouvoir positionner le véhicule (7) au-dessous des surfaces de contact (13, 14, 15) de la station de recharge qui alimentent en énergie.

3. Dispositif de transmission de courant selon la revendication 1 à 2,
**caractérisé en ce que**
les éléments de contact (1, 2, 3) individuels pour produire un contact électrique sécure sont disposés d'une manière déplaçable sur la prise (4) de courant.

4. Dispositif de transmission de courant selon l'une quelconque des revendications 1 à 3,
**caractérisé en ce que**
la prise (4) de courant de charge a un entraînement de levage (16) pour déplier les éléments de contact (1, 2, 3), qui est conçu d'être pneumatique, électrique, hydraulique ou mécanique avec un système de ressorts.

5. Dispositif de transmission de courant selon l'une quelconque des revendications 1 à 4,
**caractérisé en ce que**
la prise de courant de charge a un entraînement d'abaissement (17) pour abaisser les éléments de contact (1, 2, 3), qui est conçu d'être pneumatique, électrique, hydraulique ou mécanique avec un ressort accumulateur, ou **en ce que** les éléments de contact (1, 2, 3) sont abaissés par gravité.
